# FASCICULE DE BREVET EUROPEEN

(11) **EP 1 357 825 B1**
(45) Date de publication et mention de la délivrance du brevet: **22.03.2006**
(21) Numéro de dépôt: 02701332.5
(22) Date de dépôt: 28.01.2002
(51) Int. Cl.: A47J 43/046, A47J 42/56, A47J 27/09

(54) **DISPOSITIF DE SECURITE POUR APPAREILS ELECTROMENAGERS**
SCHUTZVORRICHTUNG FÜR ELEKTRISCHE HAUSHALTSGERÄTE
SAFETY DEVICE FOR ELECTRIC HOUSEHOLD APPLIANCES

(30) Priorité: 30.01.2001 FR 0101345
(43) Date de publication de la demande: 05.11.2003
(73) Titulaire: SEB S.A., 69130 Ecully (FR)
(72) Inventeur: ARROUBI, Mustapha, F-14610 Villons-les-Buissons (FR); LEFORGEAIS, Michel, F-14250 Fontenay Le Pesnel (FR)
(74) Mandataire: Kiehl, Hubert
(86) Numéro de dépôt international: PCT/FR2002/000335
(87) Numéro de publication internationale: WO 2002/060307

(56) Documents cités:
- WO-A-00/19878
- DE-A- 3 000 593
- DE-A- 19 729 662
- DE-A- 19 947 466
- FR-A- 2 769 199
- US-A- 5 957 577

## Description

La présente invention se rapporte aux appareils électroménagers pour le traitement des aliments comportant un corps principal renfermant un groupe-moteur et ses moyens de commande, et un accessoire de travail muni d'un outil destiné à être entraîné par le groupe-moteur.

L'invention concerne plus particulièrement un dispositif de sécurité comportant un premier moyen logé dans le corps principal de l'appareil et agissant sur les moyens de commande du groupe-moteur, et un second moyen lié à l'accessoire afin d'interdire le fonctionnement de l'appareil si l'accessoire n'est pas en place.

Dans les appareils de ce genre, une solution couramment utilisée pour les dispositifs de sécurité consiste à réaliser un dispositif mécanique qui agit sur un interrupteur placé entre l'alimentation électrique et le groupe-moteur de l'appareil. Ces dispositifs mécaniques présentent plusieurs inconvénients : ils peuvent être mis hors service assez facilement par un utilisateur peu scrupuleux ; les éléments mécaniques peuvent s'user et devenir inopérant ; ils sont sensibles aux salissures. De plus, pour certains types d'accessoires il est difficile de concevoir une sécurité mécanique qui soit acceptable esthétiquement. Par exemple, pour un bol de mélangeur transparent de forme allongée et fermé par un couvercle, il est difficile de concevoir un dispositif mécanique de sécurité pour le verrouillage du couvercle sans que ce dispositif soit apparent.

Une autre solution, décrite dans le brevet français 9000930 déposé le 26 janvier 1990 par la Demanderesse, consiste à utiliser un capteur à effet Hall susceptible de détecter un aimant solidaire de l'accessoire. Ce type de sécurité nécessite une construction particulière de l'appareil car la distance d'interaction entre l'aimant et le capteur est faible. De plus, la sécurité n'est pas absolue car le capteur peut être déjoué avec malveillance en utilisant un aimant adapté.

Le document Fr-2769199 décrit les caractéristiques techniques du préamble de la revendication 1.

La présente invention a pour but d'éliminer ces inconvénients et de réaliser notamment un dispositif de sécurité fiable tout en étant facilement intégrable dans les appareils électroménagers existants.

Selon l'invention, le premier moyen logé dans le corps principal de l'appareil est un émetteur-récepteur comprenant une antenne et un bloc d'émission-réception relié à une source de courant, et le second moyen est un transpondeur, lesdits émetteur-récepteur et transpondeur étant susceptibles d'être couplés inductivement par un champ électromagnétique radiofréquence ou hyperfréquence quand l'accessoire est mis en place sur le corps de l'appareil.

Ainsi, on peut s'assurer de la présence de l'accessoire grâce à une liaison sans contact qui a une portée suffisamment grande pour être mise en oeuvre facilement dans différents types d'appareils électroménagers sans modifier leur structure.

Le transpondeur comporte de manière préférentielle un circuit électrique d'alimentation en courant du transpondeur à partir du courant électrique induit dans l'antenne du transpondeur par le champ électromagnétique.

Grâce à cette disposition on obtient un dispositif de sécurité dont la durée de vie est quasiment illimitée.

Selon une caractéristique particulièrement intéressante l'accessoire de travail comprend un moyen de sécurité supplémentaire commandant l'alimentation électrique du transpondeur pour que celui-ci prenne soit un état actif, soit un état inactif.

Par exemple, ce moyen de sécurité supplémentaire peut être réalisé par un interrupteur, agencé entre l'antenne et le circuit d'alimentation, qui reste ouvert quand l'accessoire n'est pas correctement verrouillé. Ainsi, le transpondeur n'est plus alimenté et il ne peut plus être reconnu par l'émetteur-récepteur logé dans le corps de l'appareil.

Grâce à cette disposition, le dispositif de sécurité selon l'invention interdit le fonctionnent de l'appareil, non seulement, si l'accessoire n'est pas présent, mais aussi, si l'accessoire n'est pas correctement verrouillé.

D'autres caractéristiques et avantages de l'invention ressortiront de la description qui va suivre, donnée à titre d'exemple non limitatif, en référence aux dessins annexés dans lesquels:
- la figure 1 est une vue schématique de face d'un appareil électroménager équipé d'un dispositif de sécurité selon l'invention et dont l'accessoire, représenté non monté sur le corps de l'appareil, comprend un bol et un couvercle;
- la figure 2 est une vue schématique agrandie selon un premier mode de réalisation du moyen de sécurité lié au couvercle de l'accessoire;
- la figures 3 est une vue analogue à la figure 2, représentant un deuxième mode de réalisation du moyen de sécurité lié au couvercle;
- la figure 4 est une vue analogue à la figure 1, représentant une variante de réalisation de la partie du dispositif de sécurité lié au corps de l'appareil.

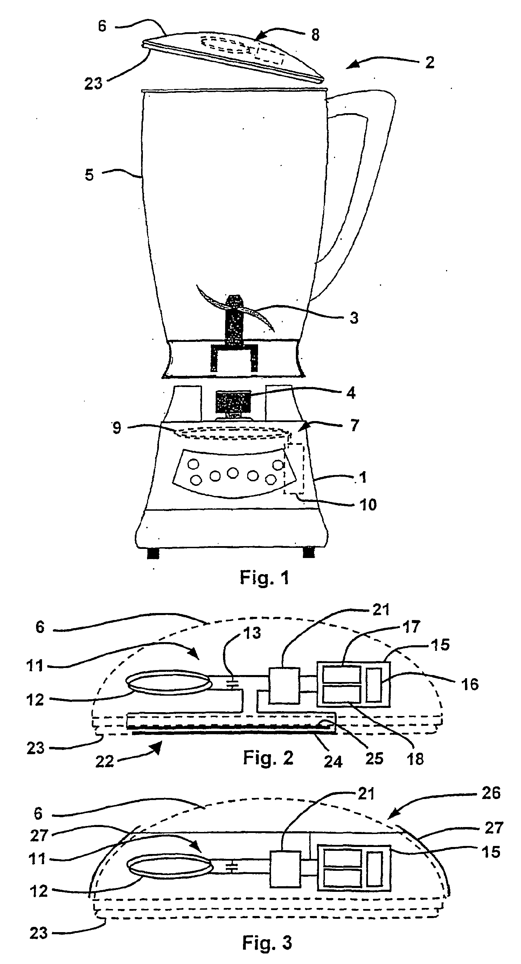

A la figure 1, on a représenté schématiquement un appareil électroménager comprenant un corps principal 1 renfermant un groupe-moteur non représenté et ses moyens de commandes, un accessoire de travail 2 monté amovible et muni d'un outil 3 destiné à être entraîné par le groupe-moteur grâce à un arbre de sortie 4 du groupe-moteur. Dans le cas représenté l'accessoire comprend un bol 5 muni d'un outil rotatif 3 et fermé par un couvercle 6. Mais bien entendu, l'invention n'est pas limitée aux appareils électroménagers employant ce type d'accessoire. Par exemple, l'accessoire peut comprendre une transmission flexible dont l'extrémité peut recevoir diverses brosses de nettoyages, ou des outils de préparation culinaire tels que fouets, mixeurs.

L'appareil est muni d'un dispositif de sécurité comportant deux moyens. Le premier moyen 7, représenté en traits interrompus, est logé dans le corps principal 1 de l'appareil et agit sur les moyens de commandes du groupe-moteur, le deuxième moyen 8, représenté en traits interrompus, est lié à l'accessoire 2.

Selon l'invention, le premier moyen 7 est un émetteur-récepteur comprenant une antenne 9 et un bloc d'émission-réception 10 relié à une source de courant, et le second moyen 8 est un transpondeur, lesdits émetteur-récepteur 7 et transpondeur 8 étant susceptibles d'êtres couplés inductivement par un champ électromagnétique radiofréquence ou hyperfréquence quand l'accessoire 2 est mis en place correctement sur le corps 1 de l'appareil.

Ainsi quand l'accessoire 2 est en place sur le corps de l'appareil, l'émetteur-récepteur 7 détecte la présence du transpondeur 8 et envoie un signal aux moyens de commande du groupe-moteur qui autorise la mise en marche de l'appareil. Grâce à cette disposition ont réalise un dispositif de sécurité sans liaison mécanique qui agit à distance et qui peut être mis en oeuvre sans modification de la structure de l'appareil.

Dans le cas représenté, l'accessoire 2 comportant deux éléments, un bol 5 et un couvercle 6, le transpondeur 8 est lié au couvercle 6 ce qui impose la mise en place de tous les éléments de l'accessoire avant de pouvoir faire fonctionner l'appareil (mise en place non représentée sur la figure 1).

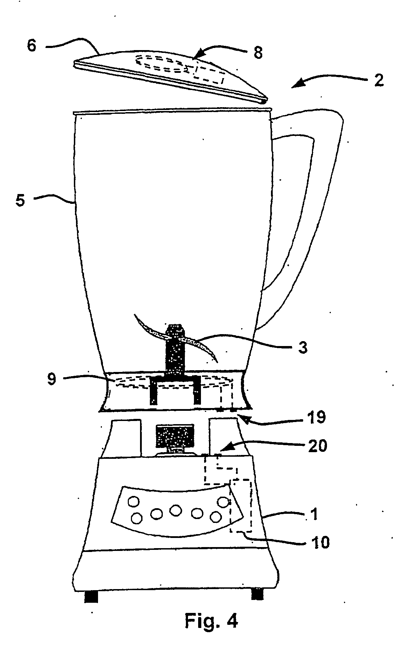

Bien entendu, le dispositif de sécurité de l'invention n'exclue pas la présence d'un système de sécurité mécanique additionnel à la base du bol 5, tel que ceux connus de l'art antérieur, permettant de vérifier le parfait verrouillage du bol 5 sur l'appareil. Mais afin d'obtenir ce résultat, l'antenne 9 de l'émetteur-récepteur 7 peut être logée dans le bol 5 de l'accessoire 2, comme le montre la figure 4, et être reliée à des moyens de connexion. Ces moyens de connexion sont agencés de manière à assurer une liaison électrique avec le bloc d'émission-réception 10 logé dans le corps principal de l'appareil uniquement quand le bol 5 est correctement verrouillé sur le corps principal 1 de l'appareil. Ces moyens de connexion peuvent être réalisés de manière simple par deux plots métalliques 19 agencés sur la face inférieure du bol 5 et par deux surfaces métallisées 20 affleurant sur la face supérieure du corps de l'appareil, lesdits plots 19 et surfaces 20 étant disposés de manière à être en contact quand le bol est correctement verrouillé. Cette disposition empêche toute possibilité de couplage inductif entre l'émetteur-récepteur et le transpondeur tant que le bol 5 n'est pas correctement verrouillé, et impose donc une condition additionnelle pour mettre en marche l'appareil.

Comme cela apparaît mieux à la figure 2, le transpondeur comprend une antenne 11 accordée sur la fréquence du champ électromagnétique émis par l'émetteur-récepteur. Cette antenne 11 comprend une bobine 12 et, de préférence, une capacité 13 montée en parallèle à ses bornes.

La bobine 12 a un diamètre et un nombre de spires calculés de manière à capter suffisamment d'énergie électromagnétique pour réaliser le couplage inductif quand l'accessoire est mis en place sur l'appareil. Toutefois, la bobine 12 ne doit pas être surdimensionnée car cela pourrait entraîner une détection intempestive de l'accessoire s'il est positionné à proximité de l'appareil. Dans ce même but, la bobine 12 est agencée de manière à être sensiblement perpendiculaire à la composante magnétique du champ généré par l'émetteur-récepteur. Ainsi si l'accessoire est placé en biais, l'énergie captée par le transpondeur est nettement inférieure et le couplage inductif avec l'émetteur-récepteur n'est pas réalisé.

La valeur de la capacité 13 est calculée de manière à ce que le circuit résonant ainsi constitué soit accordé sur la fréquence du champ créée par l'émetteur-récepteur. Ce champ peut avoir une fréquence allant de quelques dizaines de kHz à 5 GHz. A titre d'exemple, on utilise dans le cas décrit un champ électromagnétique de 125 KHz.

L'antenne 11 du transpondeur ainsi définie est reliée à un circuit intégré 15. Ce circuit intégré 15 comprend un moyen de mémorisation 16 contenant un code, des moyens de traitement 17 du signal capté par l'antenne et des moyens d'émission 18 du code mémorisé. Les moyens de traitement du signal 17 sont adaptés à détecter si l'antenne 11 est couplée inductivement avec l'émetteur-récepteur et à déclencher l'émission du code mémorisé. L'émetteur-récepteur n'autorise alors le fonctionnement du groupe-moteur que si le code reçu est correct. L'usage d'un code permet d'augmenter la fiabilité du dispositif de sécurité.

Dans le cas d'un appareil électroménager pouvant recevoir divers accessoires fonctionnant à des vitesses différentes, il est particulièrement avantageux que chaque accessoire comprenne un transpondeur dont le moyen de mémorisation contient un code propre audit accessoire. L'émetteur-récepteur comprend alors des moyens de reconnaissance des codes des différents accessoires et des moyens d'envoi d'une consigne de vitesse aux moyens de commande du groupe-moteur en fonction du code reconnu.

La consigne de vitesse peut être une vitesse maximale à ne pas dépasser pour l'accessoire reconnu. Par exemple, si l'accessoire est un pétrin, la consigne de vitesse interdira au groupe moteur de dépasser une vitesse supérieure à 400 tours/minute, même si l'utilisateur positionne le sélecteur de vitesse sur une vitesse supérieure. Ainsi les risques de détérioration de l'appareil sont évités.

Selon une autre variante, la consigne de vitesse peut correspondre à la vitesse de rotation optimale de l'accessoire. Dans ce cas l'utilisateur n'a plus qu'à actionner une touche de mise en marche, la vitesse de rotation du groupe-moteur sera automatiquement la vitesse la plus appropriée pour l'accessoire mis en place sur l'appareil.

Le transpondeur peut être alimenté par une pile électrique, mais quand la pile est usagée il ne peut plus remplir sa fonction de sécurité. Dans le but de remédier à cet inconvénient, le transpondeur comporte un circuit électrique 21 adapté à alimenter en courant le circuit intégré 15 à partir du courant électrique induit dans la l'antenne 11 du transpondeur par le champ électromagnétique. Ce circuit d'alimentation, qui comporte généralement un condensateur et un pont de diodes, peut être physiquement inclus dans le circuit intégré 15 du transpondeur.

Pour les accessoires en matière plastique, le transpondeur est de préférence surmoulé dans la matière plastique. Ceci permet d'obtenir une réalisation esthétique où le transpondeur est totalement invisible, et augmente la protection du transpondeur contre les chocs et l'humidité.

Suivant une caractéristique particulièrement intéressante de l'invention, le couvercle de l'accessoire 8 comporte un moyen de sécurité supplémentaire, 22 ou 26, commandant l'alimentation électrique du circuit intégré 15 du transpondeur pour faire prendre audit circuit intégré 15 soit un état actif, soit un état passif. Ainsi, il est possible d'imposer une condition de sécurité supplémentaire, en plus de la présence du couvercle, avant d'autoriser le fonctionnement du groupe moteur.

La figure 2 représente schématiquement un premier mode de réalisation du transpondeur et du moyen de sécurité supplémentaire 22 liés au couvercle 6. Le moyen de sécurité supplémentaire est constitué par un interrupteur 22 monté entre l'antenne 11 et le circuit électrique d'alimentation 21 du transpondeur, ledit interrupteur 22 étant adapté à être en position fermée quand le couvercle est correctement verrouillé. Quand le couvercle n'est pas correctement verrouillé l'interrupteur 22 en position ouverte coupe l'alimentation en courant du circuit intégré 15 du transpondeur, celui-ci est alors dans un état passif et ne peut pas être détecté par l'émetteur-récepteur 7.

Ce mode de réalisation peut être réalisé sous une forme équivalente en disposant l'interrupteur 22 entre les bornes de l'antenne 11 et de manière à ce qu'il soit en position ouverte quand le couvercle est correctement verrouillé et qu'il soit en position fermé quand le couvercle n'est pas verrouillé. Si le couvercle n'est pas correctement verrouillé, l'interrupteur en position fermée court-circuite le circuit d'alimentation 21 et le circuit intégré 15 du transpondeur prend un état passif.

Le couvercle 6, représenté en traits interrompus à la figure 2, comporte un joint creux 23 destiné à assurer l'étanchéité quand le couvercle 6 ferme le bol 5. De manière préférentielle, l'interrupteur 22 est alors constitué par deux pistes conductrices (24,25) s'étendant le long de la cavité intérieure dudit joint creux 23, les pistes (24,25) étant agencées de manière à être mises en contact quand le joint 23 est écrasé par le verrouillage du couvercle 6 sur le bol 5. Grâce à cette disposition, il faut non seulement que le couvercle 6 soit présent pour que l'appareil fonctionne, mais aussi qu'il soit verrouillé pour que le joint 23 reste écrasé. Le dispositif de sécurité ainsi réalisé a l'avantage de ne présenter aucune partie apparente qui pourrait être endommagée ou souillée par des liquides.

Mais bien entendu l'interrupteur 22 peut être réalisé sous d'autres formes. A titre d'exemple, il peut s'agir d'un interrupteur de type bouton poussoir, de deux plots métalliques destinés à venir en contact avec une piste conductrice réalisée sur le rebord supérieur du bol, ou même d'un capteur de pression. En effet, pour faire passer le circuit intégré du transpondeur d'un état passif à un état actif il suffit que l'interrupteur en position ouverte présente une résistance importante et une résistance résiduelle nettement inférieure en position fermée. Mais cette résistance résiduelle peut atteindre quelques dizaines d'ohms.

L'interrupteur 22, constitué par les deux pistes conductrices, représenté à la figure 2 est disposé entre l'antenne 11 et le circuit d'alimentation 21, mais évidemment on obtiendra le même résultat en disposant l'interrupteur 22 entre le circuit d'alimentation 21 et le circuit intégré 15.

Le moyen de sécurité supplémentaire commandant le circuit d'alimentation peut être réalisé de manière différente, comme cela est représenté à la figure 3. Selon ce mode de réalisation le moyen de sécurité supplémentaire est un organe tactile 26 comprenant une surface conductrice 27 s'étendant au moins sur une partie des moyens de préhension du couvercle 6. Cette surface conductrice 27 est reliée au circuit électrique d'alimentation 21 du transpondeur de manière à faire prendre au circuit intégré 15 son état actif qu'en l'absence de contact sur l'organe tactile 26.

Si l'utilisateur tient le couvercle à faible hauteur au-dessus du bol le transpondeur est susceptible de recevoir suffisamment d'énergie pour autoriser le fonctionnement du groupe-moteur, mais grâce à la disposition décrite ci-dessus le circuit intégré 15 est rendu inactif. En effet le corps de l'utilisateur, mis en contact avec le circuit d'alimentation 21 par l'intermédiaire de l'organe tactile 26, crée une fuite de courant importante par rapport à la très faible énergie électrique mise en jeu dans l'antenne 11. Le circuit intégré 15 du transpondeur prend alors un état passif car il n'est plus correctement alimenté.

De manière préférentielle la surface conductrice 27 de l'organe tactile 26 est reliée à la sortie de tension continue positive du circuit d'alimentation 21, mais la Demanderesse a observé que l'on pouvait obtenir le même résultat en reliant la surface conductrice 27 à une borne de l'antenne 11.

Bien entendu, la présente invention est susceptible de diverses variantes et modifications. Il est notamment possible d'équiper chaque élément d'un accessoire en plusieurs parties de transpondeurs. On utilisera alors des transpondeurs équipés d'un protocole de communication anti-collision qui permettent à l'émetteur-récepteur de vérifier la présence de tous les transpondeurs avant d'autoriser la mise en marche de l'appareil électroménager.

## Revendications

1. Appareil électroménager pour le traitement des aliments comportant un corps principal (1) renfermant un groupe-moteur électrique et ses moyens de commande, au moins un accessoire de travail (2) comprenant un outil (3) destiné à être entraîné par ledit groupe-moteur et un dispositif de sécurité comportant deux moyens, un premier moyen (7) logé dans le corps principal (1) de l'appareil et agissant sur les moyens de commande du groupe moteur, et un second moyen (8) lié à l'accessoire (2),
**caractérisé en ce que** le premier moyen (7) est un émetteur-récepteur comprenant une antenne (9) et un bloc d'émission-réception (10) relié à une source de courant, et le second moyen (8) est un transpondeur, lesdits émetteur-récepteur et transpondeur étant susceptibles d'êtres couplés inductivement par un champ électromagnétique radiofréquence ou hyperfréquence quand l'accessoire (2) est mis en place sur le corps (1) de l'appareil.

2. Appareil électroménager selon la revendication 1,
**caractérisé en ce que** le transpondeur (8) comprend une antenne (11) accordée sur la fréquence du champ électromagnétique émis par l'émetteur-récepteur (7) et un circuit intégré (15) relié à ladite antenne, ledit circuit intégré (15) comprenant un moyen de mémorisation (16) contenant au moins un code, des moyens de traitement (17) du signal capté par ladite antenne et des moyens d'émission (18) du code mémorisé.

3. Appareil électroménager selon la revendication 2,
**caractérisé en ce que** le transpondeur (8) comporte un circuit électrique (21) adapté à alimenter en courant le circuit intégré (15) à partir du courant électrique induit dans la l'antenne (11) du transpondeur par le champ électromagnétique.

4. Appareil électroménager selon la revendication 3, destiné à recevoir divers accessoires fonctionnant à des vitesses différentes,
**caractérisé en ce que** chaque accessoire comprend un transpondeur dont le moyen de mémorisation contient un code propre audit accessoire, l'émetteur-récepteur comprenant des moyens de reconnaissance des codes des différents accessoires et des moyens d'envoi d'une consigne de vitesse aux moyens de commande du groupe-moteur en fonction du code reconnu.

5. Appareil électroménager selon la revendication 3 ou 4, dont l'accessoire de travail est en matière plastique,
**caractérisé en ce que** le transpondeur est surmoulé dans ladite matière plastique.

6. Appareil électroménager selon l'une quelconque des revendications 3 à 5,
**caractérisé en ce que** l'accessoire de travail comprend un bol (5) muni d'un outil rotatif (3) et fermé par un couvercle (6), le transpondeur (8) étant lié audit couvercle (6).

7. Appareil électroménager la revendication 6,
**caractérisé en ce que** l'antenne (9) de l'émetteur-récepteur est logée dans le bol (5) de l'accessoire (2) et est reliée à des moyens de connexion, lesdits moyens de connexion assurant une liaison électrique avec le bloc d'émission-réception (10) logé dans le corps principal de l'appareil uniquement quand le bol (5) est correctement verrouillé sur le corps principal (1) de l'appareil.

8. Appareil électroménager selon la revendication 6 ou 7,
**caractérisé en ce que** le couvercle (6) de l'accessoire comporte un moyen de sécurité supplémentaire (22 ou 26) commandant l'alimentation électrique du circuit intégré (15) du transpondeur pour faire prendre audit circuit intégré soit un état actif, soit un état passif.

9. Appareil électroménager selon la revendication 8,
**caractérisé en ce que** le moyen de sécurité supplémentaire comprend un interrupteur (22) agencé entre l'antenne (11) et le circuit électrique d'alimentation (21) du transpondeur, ledit interrupteur étant adapté à être en position fermée quand le couvercle (6) est correctement verrouillé.

10. Appareil électroménager selon la revendication 9, dont le couvercle (6) fermant le bol (5) comporte un joint d'étanchéité creux (23), **caractérisé en ce que** l'interrupteur (22) du moyen supplémentaire de sécurité est constitué de deux pistes conductrices (24,25) s'étendant le long de la cavité intérieure dudit joint creux (23), lesdites pistes étant agencées de manière à être en mises en contact quand le joint (23) est écrasé par le verrouillage du couvercle (6) sur le bol (5).

11. Appareil électroménager selon la revendication 8,
**caractérisé en ce que** le moyen de sécurité supplémentaire est un organe tactile (26) comprenant une surface conductrice (27) s'étendant au moins sur une partie des moyens de préhension du couvercle (6) et reliée au circuit électrique d'alimentation du transpondeur (8) de manière à faire prendre au circuit intégré (15) son état actif qu'en l'absence de contact sur l'organe tactile (26).

## Claims

1. A domestic electrical appliance for food processing, comprising a main body (1) enclosing an electric motor unit and its control means, at least one working accessory (2) which comprises a tool (3) adapted to be driven by said electric motor unit, and a safety device consisting of two means, namely a first means (7) arranged inside the main body (1) of the appliance and acting on the control means of the motor unit, and a second means (8) connected to the accessory (2), **characterised in that** the first means (7) is an emitter-receiver comprising an antenna (9) and an emitter-receiver unit (10) connected to a current source, while the second means (8) is a transponder, said emitter-receiver and transponder being arranged to be coupled together inductively by a radio frequency or hyperfrequency electromagnetic field when the accessory (2) is fitted in place on the body (1) of the appliance.

2. A domestic electrical appliance according to claim 1, **characterised in that** the transponder (8) includes an antenna (11) tuned to the frequency of the electromagnetic field emitted by the emitter-receiver (7), and an integrated circuit (15) connected to said antenna, said integrated circuit (15) comprising a memory means (16) containing at least one code, means (17) for processing the signal received by said antenna, and means (18) for emitting the memorised code.

3. A domestic electrical appliance according to claim 2, **characterised in that** the transponder (8) comprises an electric circuit (21) which is adapted to supply current to the integrated circuit (15) taken from the electric current which is induced in the antenna (11) of the transponder by the electromagnetic field.

4. A domestic electrical appliance according to claim 3, adapted to receive a variety of accessories working at different speeds, **characterised in that** each accessory includes a transponder the memory means of which contains a code specific to that said accessory, the emitter-receiver including means for recognising the codes of the various accessories and means for sending a speed setting to the control means of the motor unit as a function of the recognised code.

5. A domestic electrical appliance according to claim 3 or 4, in which the working accessory is of plastics material, **characterised in that** the transponder is moulded in the said plastics material.

6. A domestic electrical appliance according to any one of claims 3 to 5, **characterised in that** the working accessory comprises a bowl (5) having a rotary tool (3) and being closed by a cover (6), the transponder (8) being connected to said cover (6).

7. A domestic electrical appliance according to claim 6, **characterised in that** the antenna (9) of the emitter-receiver is mounted in the bowl (5) of the accessory (2) and is connected to connecting means, the said connecting means making an electrical connection with the emitter-receiver unit (10) mounted in the main body of the appliance only when the bowl (5) is correctly locked on the main body (1) of the appliance.

8. A domestic electrical appliance according to claim 6 or 7, **characterised in that** the cover (6) of the accessory includes an additional safety means (22 or 26) which controls the power supply to the integrated circuit (15) of the transponder, whereby to cause the said integrated circuit to assume either an active state or a passive state.

9. A domestic electrical appliance according to claim 8, **characterised in that** the additional safety means comprises an interrupter (22) arranged between the antenna (11) and the electrical power supply circuit (21) of the transponder, the said interrupter being adapted to be in a closed position when the cover (6) is correctly locked in place.

10. A domestic electrical appliance according to claim 9, in which the cover (6), closing the bowl (5), includes a hollow sealing gasket (23), **characterised in that** the interrupter (22) of the additional safety means includes two conductive tracks (24, 25) extending along the internal cavity of the said hollow gasket (23), said tracks being arranged in such a way as to be put into contact with each other when the gasket (23) is squeezed by the action of locking the cover (6) on the bowl (5).

11. A domestic electrical appliance according to claim 8, **characterised in that** the additional safety means consists of a touch member (26) having a conductive surface (27) which extends at least over part of the gripping means of the cover (6), and which is connected to the electrical power supply circuit of the transponder (8), whereby to cause the integrated circuit (15) to assume its active state only in the absence of contact on the touch member (26).

## Patentansprüche

1. Elektrisches Haushaltsgerät zur Behandlung von Nahrungsmitteln mit einem Hauptkörper (1), der einen elektrischen Motor und seine Steuerungsmittel umschließt, mit mindestens einem Zubehörteil (2), der ein Werkzeug (3), das zum Antrieb durch den Motor bestimmt ist, und eine Sicherheitsvorrichtung mit zwei Mitteln aufweist, einem ersten Mittel (7), das im Hauptkörper (1) des Geräts untergebracht ist und auf die Steuerungsvorrichtungen des Motors einwirkt, und ein zweites Mittel (8), das mit dem Zubehörteil (2) verbunden ist, **dadurch gekennzeichnet, daß** das erste Mittel (7) ein Sender-Empfanger mit einer Antenne (9) und einem mit einer Stromquelle verbundenen Sende-Empfangsblock (10) und das zweite Mittel (8) ein Transponder ist, wobei der Sender-Empfänger und der Transponder induktiv durch ein elektromagnetisches Radiofrequenz-oder Hyperfrequenzfeld koppelbar sind, wenn das Zubehörteil (2) an seinem Platz am Körper (1) des Geräts angebracht ist

2. Elektrisches Haushaltsgerät nach Anspruch 1, **dadurch gekennzeichnet, daß** der Transponder (8) eine Antenne (11), die auf die Frequenz des vom Sender-Empfänger (7) ausgesandten elektrischen Feldes abgestimmt ist, und einen mit der Antenne verbundenen integrierten Schaltkreis (15) aufweist, wobei der integrierte Schaltkreis (15) ein Speichermittel (16), das mindestens einen Code enthält, Mittel (17) zur Behandlung des von der Antennen aufgefangenen Signals und Mittel (18) zur Aussendung des gespeicherten Codes aufweist.

3. Elektrisches Haushaltsgerät nach Anspruch 2, **dadurch gekennzeichnet, daß** der Transponder (8) einen elektrischen Kreis (21) aufweist, der zur Stromversorgung des integrierten Schaltkreises ausgehend von dem in der Antenne (11) des Transponders durch das elektromagnetische Feld induzierten elektrischen Strom geeignet ist.

4. Elektrisches Haushaltsgerät nach Anspruch 3, das zur Aufnahme verschiedener und bei verschiedenen Geschwindigkeiten arbeitender Zubehörteile bestimmt ist, **dadurch gekennzeichnet, daß** jedes Zubehörteil einen Transponder aufweist, dessen Speichermittel einen dem Zubehörteil eigenen Code enthält, wobei der Sender-Empfänger Mittel zur Erkennung der Codes der verschiedenen Zubehörteile und Mittel zur Übermittlung einer Geschwindigkeitseinstellung an die Steuermittel des Motors in Abhängigkeit vom erkannten Code aufweist.

5. Elektrisches Haushaltsgerät nach Anspruch 3 oder 4, dessen Zubehörteil aus Kunststoff besteht, **dadurch gekennzeichnet, daß** der Transponder in das Kunststoffmaterial eingeformt ist.

6. Elektrisches Haushaltsgerät nach einem der Ansprüche 3 bis 5, **dadurch gekennzeichnet, daß** das Zubehörteil einen Becher (5) aufweist, der mit einem drehbaren Werkzeug (3) versehen und durch einen Deckel (6) verschlossen ist, wobei der Transponder (8) mit dem Deckel (6) verbunden ist.

7. Elektrisches Haushaltsgerät nach Anspruch 6, **dadurch gekennzeichnet, daß** die Antenne (9) des Sender-Empfängers im Becher (5) des Zubehörteils (2) untergebracht und mit Verbindungsmitteln verbunden ist, welche eine elektrische Verbindung mit dem Sende-Empfangsblock (10), der im Hauptkörper des Geräts untergebracht ist, nur dann gewährleisten, wenn der Becher (5) am Hauptkörper (1) des Geräts richtig verriegelt ist.

8. Elektrisches Haushaltsgerät nach Anspruch 6 oder 7, **dadurch gekennzeichnet, daß** der Deckel (6) des Zubehörteils ein zusätzliches Sicherheitsmittel (22 oder 26) aufweist, welches die Stromversorgung des integrierten Schaltkreises (15) des Transponders so steuert, daß der integrierte Schaltkreis entweder einen aktiven oder einen passiven Zustand annimmt.

9. Elektrisches Haushaltsgerät nach Anspruch 8, **dadurch gekennzeichnet, daß** das zusätzliche Sicherheitsmittel einen zwischen der Antenne (11) und dem elektrischen Speisekreis (21) des Transponders angeordneten Schalter (22) aufweist, wobei der Schalter so eingerichtet ist, daß er in der geschlossenen Stellung ist, wenn der Deckel (6) richtig verriegelt ist.

10. Elektrisches Haushaltsgerät nach Anspruch 9, dessen den Becher (5) schließender Deckel (6) eine hohle Dichtung (23) aufweist, **dadurch gekennzeichnet, daß** der Schalter (22) des zusätzlichen Sicherheitsmittels aus zwei Leiterbahnen (24, 25) besteht, die sich längs der inneren Höhlung der hohlen Dichtung (23) erstrecken, wobei diese Leiterbahnen so ausgebildet sind, daß sie miteinander in Kontakt kommen, wenn die Dichtung (23) durch Verriegelung des Deckels (6) auf dem Becher (5) zusammengedrückt ist.

11. Elektrisches Haushaltsgerät nach Anspruch 8, **dadurch gekennzeichnet, daß** das zusätzliche Sicherheitsmittel ein taktiles Element (26) mit einer leitenden Oberfläche (27) ist, die sich über mindestens einen Teil der Greifmittel des Deckels (6) erstreckt und mit dem elektrischen Speisekreis des Transponders (8) so verbunden ist, dass der integrierte Schaltkreis (15) seinen aktiven Zustand nur bei Abwesenheit von Kontakt auf dem taktilen Element (26) einnimmt.
